# EUROPÄISCHE PATENTSCHRIFT

(11) **EP 0 790 393 B1**
(45) Veröffentlichungstag und Bekanntmachung des Hinweises auf die Patenterteilung: **26.08.1998**
(21) Anmeldenummer: 96119924.7
(22) Anmeldetag: 12.12.1996
(51) Int. Cl.: F02B 27/02

(54) **Brennkraftmaschine mit Sauganlage mit einem an gegenüberliegenden Zylinderbänken anschliessbaren Sammler, insbesondere V 8-Motor**
Internal combustion engine having an intake system with a collector connected to opposite cylinder banks, especially for a V-8 engine
Moteur à combustion interne avec un système d'admission avec un collecteur connecté à deux rangées de cylindres opposées, notamment pour un moteur V-8

(30) Priorität: 14.02.1996 DE 19605308
(43) Veröffentlichungstag der Anmeldung: 20.08.1997
(73) Patentinhaber: Bayerische Motoren Werke Aktiengesellschaft, 80788 München (DE)
(72) Erfinder: Landerl, Christian, Dr., 3363 Hausmening (AT); Wimmer, Rudolf, 4431 Haidershofen (AT); Aistleitner, Karl, 4407 Dietach (AT)

(56) Entgegenhaltungen:
- EP-A- 0 200 930
- WO-A-93/00505
- DE-A- 4 008 610
- DE-A- 4 014 291
- GB-A- 2 267 980
- PATENT ABSTRACTS OF JAPAN vol. 015, no. 117 (M-1095), 20.März 1991 & JP 03 009023 A (HONDA MOTOR CO LTD), 16.Januar 1991,

## Beschreibung

Die Erfindung geht gemäß dem Oberbegriff des Patentanspruches 1 von der DE-C 40 14 291 aus.

Dieses Dokument zeigt und beschreibt eine Sauganlage für eine als V 8-Motor gestaltete Brennkraftmaschine. Derartige V 8-Motoren mit einer üblicherweise rechtsdrehenden, zwei Kröpfungsebenen aufweisenden Kurbelwelle haben die bekannte Zündfolge 1-5-4-8-6-3-7-2, die in beiden Zylinderbänken unregelmäßige Zündabstände zur Folge hat.

Um einen durch diese unregelmäßigen Zündabstände gegebenen Füllungsnachteil für bestimmte Zylinder beider Zylinderbänke zu beheben, weist die Sauganlage der gattungsbildenden DE-C 40 14 291 einen Sammler auf, dessen Innenraum mittels einer betriebsabhängig steuerbaren Klappe in etwa zwei gleichgroße Teilvolumen unterteilbar ist zur Erzielung einer der vorbestimmten Zündfolge entsprechenden Luftzuführung zu Einlaßleitungen der Zylinder in beiden Zylinderbänken. Diese klappengesteuerte Füllungsoptimierung für zündfolgerichtig in Gruppen von auf beide Zylinderbänke verteilten Zylindern dient im wesentlichen einer Drehmomentanhebung.

Bekanntlich ist es für eine Reihe von Motorregelungen notwendig, zumindest zeitweilig zylinderbankspezifische Zuordnungen z.B. von angesaugter Luftmenge, eingebrachtem Kraftstoff und die Zusammensetzung der Abgase zu ermitteln oder zylinderbankspezifische Eingriffe wie z.B. Drosselung oder Abgasrückführung zu bewerkstelligen. Dies erlaubt der aus der gattungsbildenden Schrift bekannte Sammler nachteiligerweise nicht.

Der Erfindung liegt die Aufgabe zugrunde, einen nach Oberbegriffsmerkmalen des Anspruches 1 gestalteten Sammler einer Sauganlage für insbesondere einen V-Motor derart weiterzubilden, daß zumindest zeitweilig zylinderbankspezifische Erfassungen von Maschinen-Betriebsparametern zur Steuerung/Regelung der Brennkraftmaschine erzielt sind.

Die Lösung dieser Aufgabe ist nach dem Patentanspruch 1 dadurch gekennzeichnet, daß eine den Innenraum etwa volumenhälftig unterteilende Trennwand mit einer über eine Haupterstreckung des Sammlers ausgebildeten Ausnehmung mit mittig drehbeweglich angeordneter Klappe vorgesehen ist, die in Schließstellung der Ausnehmung den Sammler-Innenraum in Teilvolumina mit zündfolgerichtig angeordneten Einlaßleitungen unterteilt, und die in einer dazu quergerichteten Schließstellung zwischen gegenüberliegenden Wandabschnitten des Sammlers über die klappenunterteilte Ausnehmung verbundene Teilvolumina mit zylinderbankseitig wirksam angeschlossenen Einlaßleitungen abteilt.

Der Vorteil der Erfindung ist in einer zylinderbankseparaten Erfassung von Maschinen-Betriebsparametem zu sehen, die dem Ziel einer optimalen Motorsteuerung/-regelung dienen.

Die Ansprüche 2 mit 4 beschreiben vorteilhafte bauliche Ausgestaltungen des erfindungsgemäßen Sammlers, womit einerseits ein im Aufbau einfach gestalteter Sammler erzielt ist und andererseits die Klappe als eine einsetzbare Baueinheit gestaltet die Montage im Sammler wesentlich vereinfacht. Mit der vorgeschlagenen Gestaltung der Klappe in baulicher Kombination mit Lagerscheiben ermöglicht für diese eine außenumfänglich wirksame Dichtanordnung, die in beiden Schließstellungen der Klappe die jeweiligen Teilvolumen weitestgehend voneinander gasdicht trennt.

Mit dieser vorteilhaften Sammlergestaltung können bei einer Brennkraftmaschine mit nach den Ansprüchen 6 und 7 vorgesehenen Abgasrückführeinrichtungen zylinderbankspezifische Mengenerfassungen der rückgeführten Abgase durchgeführt werden. Diese Mengenerfassung kann z.B. bei einer Diesel-Brennkraftmaschine der bekannten Rußregelung durch Änderung des Luft-/Kraftstoff-Verhältnisses dienen. Weiter eröffnet diese Mengenerfassung die Möglichkeit der Steuerung, insbesondere der Steigerung der Abgasrückführraten, vorzugsweise durch zylinderbankspezifisches Drosseln des jeweiligen Ansaugrohres mittels einer stromauf der Zumischstelle angeordneten Drosselklappe.

Schließlich findet der erfindungsgemäße Sammler eine vorteilhafte Verwendung bei einer Brennkraftmaschine mit Zylinderbank-Abschaltung. Im übrigen ist mit der hohen Abdichtqualität zwischen zündfolgerichtig getrennten Teilvolumina bei einer Brennkraftmaschine mit Ladebetrieb, insbesondere mittels Abgasturbolader, ein Druckausgleich im Sammler sicher vermieden und damit auch eine ungleiche Wirksamkeit der jeder Zylinderbank zugeordneten Abgasturbolader.

Die Erfindung ist anhand eines in der Zeichnung dargestellten, bevorzugten Ausführungsbeispiels beschrieben. Es zeigt
- Figur 1: eine als V 8-Motor gestaltete Brennkraftmaschine mit einer Sauganlage,
- Figur 2: einen in Figur 1 zwischen Zylinderbänken der Brennkraftmaschine nach Figur 1 angeordneten Sammler in Draufsicht,
- Figur 3: den Sammler nach Figur 2 im Querschnitt, und
- Figur 4: in einem Ausschnitt vergrößert dargestellte elastische Dichtlippen an einer Längsseite der Sammler-Klappe.

Eine als V 8-Motor gestaltete Brennkraftmaschine 10 ist mit einem zwischen gegenüberliegenden Zylinderbänken 11, 11' angeordneten Sammler 12 einer Sauganlage 13 ausgerüstet. Die Brennkraftmaschine 10 umfaßt weiter eine nicht gezeigte, rechtsdrehende Kurbelwelle mit zwei Kröpfungsebenen für eine in den Zylindem 1 bis 8 der Zylinderbänke 11, 11' übliche Zündfolge 1-5-4-8-6-3-7-2.

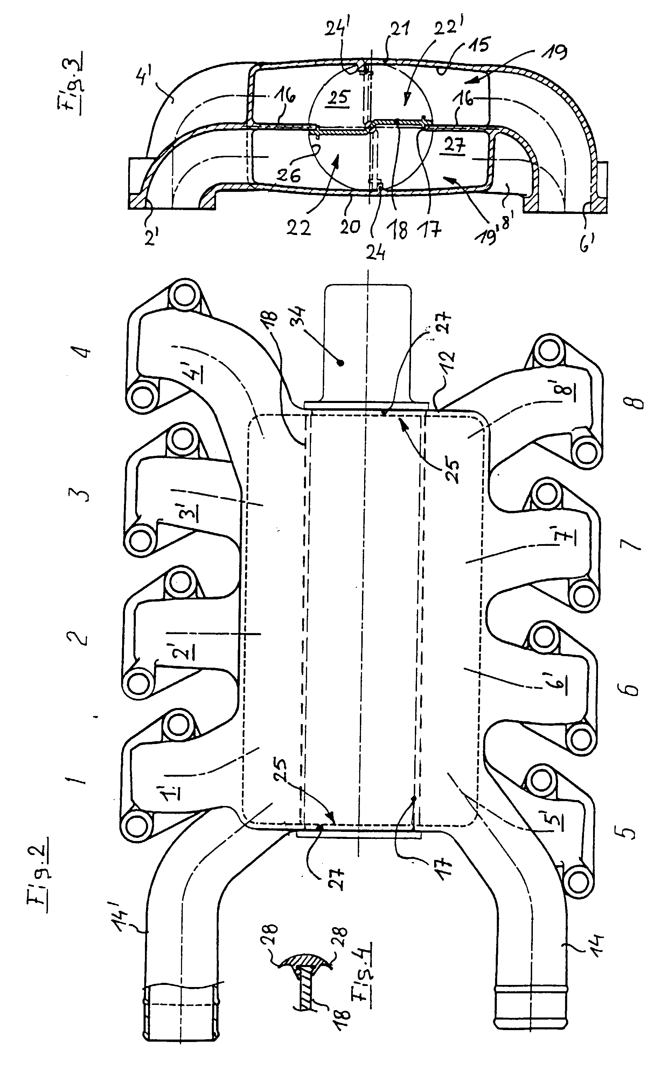

An den gemäß den Figuren 2 und 3 quaderförmig gestalteten Sammler 12 sind die Zylinder 1 bis 8 über Einlaßleitungen 1' bis 8' angeschlossen. Wie aus den Figuren 2 und 3 weiter hervorgeht, münden die Einlaßleitungen 1', 4', 6', 7' jeweils seitlich in einem oberen Bereich des Sammlers 12, wogegen die Einlaßleitungen 5', 8', 3', 2' jeweils seitlich in einem unteren Bereich des Sammlers 12 münden. Hierbei beträgt der Zündabstand zwischen den gruppenweise erfaßten Einlaßleitungen 1' bis 7' und 5' bis 2' jeweils 180°.

Weiter weist der Sammler 12 ein in seinem oberen, mit den Einlaßleitungen 1' bis 7' verbundenen Bereich ein Ansaugrohr 14 und in seinem mit den Einlaßleitungen 5' bis 2' verbundenen unteren Bereich ein Ansaugrohr 14' auf.

Gemäß den Figuren 2 und 3 ist der Innenraum 15 des Sammlers 12 volumenhälftig durch eine Trennwand 16 mit einer über in einer Haupterstreckung des Sammlers 12 ausgebildeten Ausnehmung 17 unterteilt, in der eine mittig drehbeweglich angeordnete Klappe 18 vorgesehen ist. Diese Klappe 18 unterteilt in Schließstellung der Ausnehmung 17 den Sammler-Innenraum 15 in Teilvolumina 19, 19' mit zündfolgerichtig zugeordneten Einlaßleitungen 1' bis 7' und 5' bis 2'. Diese Klappen-Schließanordnung dient vorzugsweise einer Drehmomentanhebung bzw. Drehmomentsteuerung der Brennkraftmaschine 10.

Mit dieser Klappe 18 sind femer erfindungsgemäß in einer dazu quergerichteten Schließstellung zwischen boden- und deckwandseitigen Abschnitten 20, 21 des Sammlers 12 über die klappenunterteilte Ausnehmung 17 verbundene Teilvolumina 22, 22' mit zylinderbankseitig wirksam angeschlossenen Einlaßleitungen 1', 2', 3', 4' und 5', 6', 7', 8' erzielt. Diese Klappen-Schließanordnung dient z.B. vorteilhafter Weise für eine zumindest zeitweilige zylinderbankspezifische Erfassung von Maschinen-Betriebsparametem zur optimalen Steuerung/Regelung der Brennkraftmaschine 10. Dies gilt insbesondere für eine Brennkraftmaschine 10 mit einer jeder Zylinderbank 11, 11' zugeordneten Abgasrückführungseinrichtung 23, 23', wie weiter unten näher erläutert.

Vorzugsweise erstreckt sich die Ausnehmung 17 in der Trennwand 16 mittig zwischen gegenüberliegenden Mündungen der Einlaßleitungen 1' bis 8' über die Innenlänge des Luft-Sammlers 12, wobei die Ausnehmung 17 eine etwa dem Abstand von boden- und deckwandseitigen Abschnitten 20 ,21 entsprechende Breite aufweist für die über der Breite der Ausnehmung 17 mittig drehbeweglich angeordnete Klappe 18. Diese steht in drehmomentbezogener bzw. drehmomentorientierter Schließstellung mit der Trennwand 16 und in zylinderbankorientierter bzw. zylinderbankseitiger Schließstellung mit den Wandabschnitten 20, 21 bzw. daran vorgesehenen Anschlägen 24, 24' in dichter Verbindung.

Zur Ausgestaltung der Klappe 18 als ein in den Sammler 12 einsetzbares Bauteil und zur Erzielung einer hohen Abdichtqualität steht die Klappe 18 in beiden Endbereichen mit zylindrischen Lagerscheiben 25 von mindestens einem der Breite der Ausnehmung 17 entsprechenden Durchmesser in Verbindung, wobei die in Durchbrechungen 26 in gegenüberliegenden Stimwänden 27 des Sammlers 12 gelagert angeordneten Lagerscheiben 25 außenumfänglich mit den Durchbrechungen 26 unter Zwischenschaltung elastischer Dichtmittel, vorzugweise O-Ringe in Verbindung stehen.

Zur Steigerung der Abdichtwirkung kann die Klappe 18 gemäß Figur 4 an ihren Längsseiten mit gesonderten, elastischen Dichtlippen 28 zur Anlage an der Trennwand 16 einerseits und den boden- und deckwandseitigen Anschlägen 24, 24' andererseits ausgerüstet sein.

Der erfindungsgemäß gestaltete Sammler 12 findet bevorzugt Verwendung bei einer Brennkraftmaschine 10, der je Zylinderbank 11, 11' jeweils eine gesteuerte/geregelte Abgasrückführeinrichtung 23, 23' zugeordnet ist mit jeweils einer Zumischstelle 29, 29' in den bis zum Sammler 12 gesondert verlaufenden Ansaugrohren 14, 14'. Der Sammler 12 mit in zylinderbankorientierter Schließstellung der Klappe 18 zwischen den Wandabschnitten 20, 21 ermöglicht somit in vorteilhafter Weise die Erfassung der je Zylinderbank 11, 11' gegebenen Abgasrückführrate.

Der vorteilhaft dicht in zylinderbankseitige Teilvolumina 22, 22' unterteilbare Sammler 12 ist insbesondere bei einer Brennkraftmaschine 10 verwendbar, bei der jeder Zylinderbank 11, 11' ein Abgasturbolader 30, 30' zugeordnet ist, wobei jede einer Zylinderbank 11, 11' zugeordnete Abgasrückführeinrichtung 23, 23' einen abgasseitigen Leitungsanschluß 31, 31' stromauf des jeweiligen Abgasturboladers 30, 30' aufweist.

Zur feinfühligen Dosierung der Abgasraten für die Zylinderbänke 11, 11' können stromauf der Zumischstellen 29, 29' in den Zuleitungen 32, 32' der Sauganlage 13 z.B. steuer- oder regelbare Drosselklappen 33, 33' angeordnet sein.

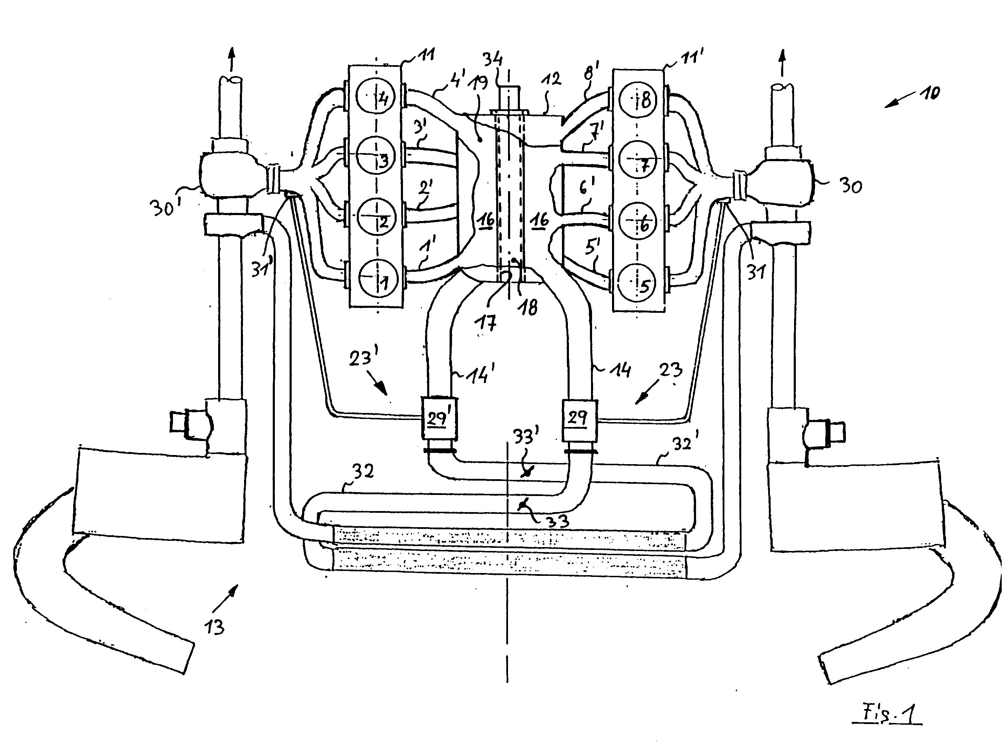

Wie den Figuren 1 und 2 zu entnehmen ist, steht die Klappe 18 mit einem vorzugsweise elektrischen Stellmotor 34 in Antriebsverbindung, der die Klappe 18 in der Ausnehmung 17 der Trennwand 16 betriebspunktabhängig auch in eine Zwischenstellung steuern kann.

Eine weitere Anwendung des erfindungsgemäßen Sammlers 12 ergibt sich für eine Brennkraftmaschine 10 mit Zylinderbank-Abschaltung, wobei die Klappe 18 bei Abschaltung einer Zylinderbank 11 oder 11' in die Schließstellung für zylinderbankseitig getrennte Teilvolumina 22, 22' gesteuert ist.

## Patentansprüche

1. Brennkraftmaschine mit Sauganlage mit einem an gegenüberliegenden Zylinderbänken anschließbaren Sammler, insbesondere V 8-Motor,
- dessen Innenraum (15) mittels einer steuerbaren Klappe (18) in etwa zwei gleich große Teilvolumina unterteilbar ist für eine einer vorbestimmten Zündfolge entsprechenden Luftzuführung zu Einlaßleitungen (1' - 8') der Zylinder (1 - 8) in den Zylinderbänken (11,11'),
dadurch gekennzeichnet,
- daß eine den Innenraum (15) etwa volumenhälftig unterteilende Trennwand (16) mit einer über eine Haupterstreckung des Sammlers (12) ausgebildeten Ausnehmung (17) mit mittig drehbeweglich angeordneter Klappe (18) vorgesehen ist, die
- in Schließstellung der Ausnehmung (17) den Sammler-Innenraum (15) in Teilvolumina (19,19') 19') mit zündfolgerichtig angeordneten Einlaßleitungen (1' - 7'; 5' - 2') unterteilt, und die
- in einer dazu quergerichteten Schließstellung zwischen gegenüberliegenden Wandabschnitten (20, 21) des Sammlers (12) über die klappenunterteilte Ausnehmung (17) verbundene Teilvolumina (22, 22') mit zylinderbankseitig wirksam angeschlossenen Einlaßleitungen (1', 2', 3', 4' und 5', 6', 7', 8') abteilt.

2. Brennkraftmaschine nach Anspruch 1, dadurch gekennzeichnet,
- daß die Ausnehmung (17) in der Trennwand (16) sich über die Innenlänge des Sammlers (12) erstreckt, und
- eine etwa dem Abstand von boden- und deckwandseitigen Abschnitten (20, 21) des Sammlers (12) entsprechende Breite aufweist für die über der Breite in der Ausnehmung (17) mittig drehbeweglich angeordnete Klappe (18), die
- in drehmomentbezogener Schließstellung mit der Trennwand (16) und in zylinderbankorientierter Schließstellung mit den Wandabschnitten (20, 21) bzw. daran vorgesehenen Anschlägen (24, 24') in dichter Verbindung steht.

3. Brennkraftmaschinen nach Anspruch 1 und 2, dadurch gekennzeichnet,
- daß die Klappe (18) in beiden Endbereichen mit zylindrischen Lagerscheiben (25) von mindestens einem der Breite der Ausnehmung (17) entsprechenden Durchmesser in Verbindung steht, wobei
- die in Durchbrechungen (26) in gegenüberliegenden Stimwänden (27) des Sammlers (12) gelagert angeordneten Lagerscheiben (25) mit den Durchbrechungen (26) unter Zwischenschaltung elastischer Dichtmittel, z.B. O-Ringe, in Verbindung stehen.

4. Brennkraftmaschine nach den Ansprüchen 1 bis 3, dadurch gekennzeichnet, daß die Klappe (18) an ihren Längsseiten mit gesonderten, elastischen Dichtlippen (28) zur Anlage an der Trennwand (16) einerseits und an boden- und deckwandseitigen Anschlägen (24, 24') andererseits ausgerüstet ist.

5. Brennkraftmaschine nach den Ansprüchen 1 bis 4, dadurch gekennzeichnet, daß die Klappe (18) in der Ausnehmung (17) in eine Zwischenstellung steuerbar ist.

6. Brennkraftmaschine nach den Ansprüchen 1 bis 5, dadurch gekennzeichnet,
- daß jeder Zylinderbank (11, 11') eine gesteuerte/geregelte Abgasrückführeinrichtung (23, 23') zugeordnet ist und
- daß jede eine Zumischstelle (29, 29') in voneinander gesonderten Ansaugrohren (14, 14') des Sammlers (12) umfaßt.

7. Brennkraftmaschine nach einem oder mehreren der Ansprüche 1 bis 6, dadurch gekennzeichnet,
- daß jeder Zylinderbank (11, 11') ein Abgasturbolader (30, 30') zugeordnet ist, und
- daß jede einer Zylinderbank (11, 11') zugeordnete Abgasrückführeinrichtung (23, 23') einen abgasseitigen Leitungsanschluß (31, 31') stromauf des jeweiligen Abgasturboladers (30, 30') aufweist.

8. Brennkraftmaschine nach den oder Ansprüchen 6 oder 7, wenn abhängig von Anspruch 6, dadurch gekennzeichnet, daß in jedem Ansaugrohr (14, 14') stromauf der Zumischstelle (29, 29') eine steuer-/regelbare Drosselklappe (33, 33') angeordnet ist.

9. Brennkraftmaschine nach einem oder mehreren der Ansprüche 1 bis 8, dadurch gekennzeichnet, daß die Klappe (18) bei Abschaltung einer Zylinderbank (11, 11') in die Schließstellung für zylinderseitig getrennte Teilvolumina (20, 22') gesteuert ist.

## Claims

1. A combustion engine with a collector which can be assembled to opposing cylinder banks, especially a V8 motor,
- whose inner space (15) can be divided into somewhat equally large part volumes by means of a controllable flap (18) for a suitable air supply for a predetermined ignition sequence to inlet pipes (1' - 8') of the cylinders (1 - 8) in the cylinder banks (11, 11')
characterised in that
- a dividing wall (16) in the inner space (15) dividing the volume somewhat in halves with a cut-out (17) formed over a major dimension of the collector (12) is provided centrally with a rotatable arranged flap (18), which
- in the closed position of the cut-out (17) divides the collector inner space (15) into part volumes (19, 19') with inlet pipes (1' - 7'; 5' - 2') arranged in accordance with the ignition sequence, and which
- in a closed position transverse to this between opposing wall sections (20, 21) of the collector (12) separates the part volumes (22, 22') with cylinder bank side effectively connected inlet pipes (1', 2', 3', 4' and 5', 6', 7', 8') via the flap-divided cut-out (17).

2. A combustion engine according to Claim 1, characterised in that,
- the cut-out (17) in the dividing wall (16) extends over the internal length of the collector (12), and
- has a width somewhat corresponding to the distance between the bottom and top sections (20, 21) of the collector (12) for the centrally rotatable flap (18) arranged over the width of the cut-out (17), which
- in the torque-related closed position is in sealed contact with the dividing wall (16) and in the cylinder bank oriented closed position with the wall sections (20, 21) or with stops (24, 24') provided on them.

3. A combustion engine according to Claims 1 and 2, characterised in that
- the flap (18) is in contact in both end regions with cylindrical bearing discs (25) of a diameter at least corresponding to the width of the cut-out (17), whereby
- the bearing discs (25) arranged in bearings in penetrations (26) in the opposing end walls (27) of the collector (12) are in connection with interposed elastic sealing means e.g. O-Rings.

4. A combustion engine according to claims 1 to 3, characterised in that the flap (18) is fitted on its long sides with separate elastic sealing lips (28) to lie upon the dividing wall (16) on the one hand and on bottom and top stops (24, 24') on the other hand.

5. A combustion engine according to claims 1 to 4, characterised in that the flap (18) can be controlled into an intermediate position in the cut-out (17)

6. A combustion engine according to claims 1 to 5, characterised in that
- a controlled/regulated exhaust gas recirculating arrangement (23, 23') is attached to each cylinder bank (11, 11'), and
- each includes an admixing point (29, 29') in suction pipes (14, 14') separated from each other of the collector (12).

7. A combustion engine according to one or more of the claims 1 to 6, characterised in that
- an exhaust turbocharger (30, 30') is provided for each cylinder bank (11, 11'), and
- each exhaust gas recirculating arrangement (23, 23') allocated to a cylinder bank (11, 11') has an exhaust side pipe connection (31, 31') upstream from the exhaust turbocharger (30, 30') in each case.

8. A combustion engine according to claims 6 or 7, when dependent on Claim 6, characterised in that in each suction tube (14, 14') upstream of the admixing position (29, 29') a controllable/regulated throttle flap (33, 33') is arranged.

9. A combustion engine according to one or more of the claims 1 to 8, characterised in that the flap (18) is controlled into the closed position for cylinder side separated part volumes (22, 22') when one cylinder bank (11, 11') is disconnected.

## Revendications

1. Moteur à combustion interne comprenant un système d'admission avec un collecteur que l'on peut raccorder à des rangées de cylindres se faisant vis à vis, en particulier pour un moteur V-8,
- collecteur dont l'intérieur (15) peut être subdivisé en deux volumes partiels ayant à peu près la même grandeur pour une amenée d'air, correspondant à un ordre prédéterminé d'allumage, aux conduites d'entrée (1' - 8') des cylindres (1 - 8) dans les rangées de cylindres (11, 11'),
- caractérisé en ce que
- l'on prévoit une cloison de séparation (16), qui subdivise le volume intérieur (15) à peu près en deux moitiés, avec un évidement (17) constitué sur une étendue principale du collecteur (12), et avec un clapet (18) disposé au milieu de façon à pouvoir tourner, cloison de séparation (16) qui
- quand l'évidement (17) est en position de fermeture, subdivise l'intérieur (15) du collecteur en des volumes partiels (19, 19') avec des conduites d'entrée (1' - 7'; 5' - 2') disposées de façon correcte en ce qui concerne l'ordre d'allumage, et qui, dans une position de fermeture orientée perpendiculairement à cela, entre des sections de paroi opposées (20, 21) du collecteur (12), compartimente les volumes partiels (22, 22') reliés au moyen de l'évidement (17) subdivisé par le clapet, avec des conduites d'entrée (1', 2', 3', 4' et 5', 6', 7', 8') raccordées de façon opérationnelle du côté des rangées de cylindres

2. Moteur à combustion interne selon la revendication 1, caractérisé en ce que
- l'évidement (17) s'étend dans la cloison de séparation (16) sur la longueur intérieure du collecteur (12), et
- présente une largeur qui correspond à peu près à la distance entre les sections (20, 21) du collecteur (12) qui sont situées du côté de la paroi du fond et du côté de la paroi du couvercle, pour le clapet (18) disposé au milieu sur la largeur dans l'évidement (17) de façon à pouvoir tourner, clapet (18) qui
- dans la position de fermeture se rapportant au couple de torsion, est en liaison étanche avec la cloison de séparation (16) et, dans la position de fermeture orientée par rapport aux rangées de cylindres, est en liaison étanche avec les sections de paroi (20, 21) ou avec des butées (24, 24') prévues dessus.

3. Moteur à combustion interne selon la revendication 1 ou 2,
caractérisé en ce que
- le clapet (18) est en liaison, dans les deux zones terminales, avec des disques d'appui cylindriques (25) ayant un diamètre qui correspond au moins à la largeur de l'évidement (17),
- les disques d'appui (25), disposés de façon à être montés dans des ajours (26) des parois frontales opposées (27) du collecteur (12), sont en liaison avec les ajours (26) en interposant des moyens d'étanchéité élastiques, par exemple des joints toriques.

4. Moteur à combustion interne selon les revendications 1 à 3,
caractérisé en ce que
le clapet (18) est équipé, sur ses côtés longitudinaux, de lèvres d'étanchéité particulières élastiques (28) destinées à venir en appui sur la cloison de séparation (18), d'une part, et sur des butées (24, 24') situées du côté de la paroi du fond et du côté de la paroi du couvercle, d'autre part.

5. Moteur à combustion interne selon les revendications 1 à 4,
caractérisé en ce que
le clapet (18) peut être placé dans une position intermédiaire dans l'évidement (17).

6. Moteur à combustion interne selon les revendications 1 à 4,
caractérisé en ce que
• un système de recyclage des gaz d'échappement (23, 23'), commandé et/ou réglé, est associé à chaque rangée de cylindres (11, 11'), et
• chacun comprend un point de mélange (29, 29') dans des tuyaux d'aspiration (14, 14'), séparés l'un de l'autre, du collecteur (12).

7. Moteur à combustion interne selon l'une ou plusieurs des revendications 1 à 6,
caractérisé en ce que
• un turbocompresseur (30, 30') de gaz d'échappement est associé à chaque rangée de cylindres (11, 11'), et
• chaque système de recyclage des gaz d'échappement (23, 23'), qui est associé à une rangée de cylindres (11, 11'), présente un raccordement (31, 31') situé, du côté des gaz d'échappement, en amont du turbocompresseur de gaz d'échappement correspondant (30, 30').

8. Moteur à combustion interne selon l'une ou les deux revendications 6 ou 7, si cette dernière dépend de la revendication 6,
caractérisé en ce que
dans chaque tuyau d'aspiration (14, 14') est disposé, en amont du point de mélange (29, 29'), un clapet d'étranglement (33, 33') que l'on peut commander et/ou régler.

9. Moteur à combustion interne selon l'une ou plusieurs des revendications 1 à 8,
caractérisé en ce que
le clapet (18), lors de la mise hors circuit d'une rangée de cylindres (11, 11'), est mis dans la position de fermeture pour les volumes partiels (20, 22') séparés, situés du côté des cylindres.
